# FASCICULE DE BREVET EUROPEEN

(11) **EP 0 744 797 B1**
(45) Date de publication et mention de la délivrance du brevet: **08.09.1999**
(21) Numéro de dépôt: 96401116.7
(22) Date de dépôt: 23.05.1996
(51) Int. Cl.: H01S 3/06, H04B 10/17

(54) **Source de longueurs d'onde multiples**
Multiwellenlängenquelle
Multiwavelength source

(30) Priorité: 24.05.1995 FR 9506221
(43) Date de publication de la demande: 27.11.1996
(73) Titulaire: ALCATEL, 75008 Paris (FR)
(72) Inventeur: Bousselet, Philippe, 91630 Leudeville (FR); Artigaud, Serge, 91210 Draveil (FR); Beylat, Jean-Luc, 92160 Antony (FR)
(74) Mandataire: Lamoureux, Bernard

(56) Documents cités:
- EP-A- 0 524 558
- EP-A- 0 564 098
- WO-A-91/18434
- US-A- 5 283 686
- IEEE PHOTONICS TECHNOLOGY LETTERS, vol. 6, no. 5, Mai 1994, NEW YORK US, pages 613-615, XP000446974 D.BAYART ET AL.: "Experimental investigation of the gain flatness characteristics for 1.55 um Erbium-doped fluoride fiber amplifiers"
- IEEE PHOTONICS TECHNOLOGY LETTERS, vol. 5, no. 12, 1 Décembre 1993, pages 1458-1461, XP000432998 LEE J S ET AL: "SPECTRUM-SLICED FIBER AMPLIFIER LIGHT SOURC FOR MULTICHANNEL WDM APPLICATIONS"
- IEEE PHOTONICS TECHNOLOGY LETTERS, vol. 6, no. 10, 1 Octobre 1994, pages 1197-1199, XP000476940 LEE J S ET AL: "BANDWIDTH OPTIMIZATION OF A SPECTRUM-SLICED FIBER AMPLIFIER LIGHT SOURCE USING AN ANGLE-TUNED FABRY-PEROT FILTER AND A DOUBLE-STAGE STRUCTURE"

## Description

La présente invention concerne une source de longueurs d'ondes multiples, notamment pour la communication optique à plusieurs canaux multiplexés en longueur d'onde, comprenant une source de lumière à large bande couplée à des moyens de séparation de longueurs d'onde discrètes.

Les systèmes de communication optique se tournent vers le multiplexage en longueur d'onde qui permet de véhiculer plusieurs canaux de communication sur un même support de transmission optique. Chacun de ces canaux est constitué par une source d'une longueur d'onde particulière qui est modulée par l'information à transmettre sur ce canal, couplée avec d'autres sur un même support, une fibre optique généralement, séparée ensuite des autres canaux pour être enfin démodulée, ce qui restitue l'information transmise.

La transmission de plusieurs canaux multiplexés demande que les longueurs d'onde porteuses des différents canaux soient à l'origine précisément situées dans le spectre et d'une grande pureté spectrale.

La technique n'a offert initialement que des sources indépendantes, diodes laser, en particulier, pour engendrer les longueurs d'onde des différents canaux. Outre le coût initial élevé d'une multiplicité de sources, cette solution est également insatisfaisante en ce que des sources indépendantes répondent indépendamment les unes des autres à leurs conditions d'emploi, ce qui entraîne des coûts additionnels élevés pour l'établissement et le maintien des réglages de chaque source.

On a donc envisagé d'obtenir les longueurs d'onde de différents canaux à partir d'une source unique, en vue d'obtenir au moins un comportement unitaire d'une source de longueurs d'onde multiples, permettant de simplifier les réglages mentionnés.

Le principe d'une telle solution est évoqué dans l'article "Spectrum-Sliced Fiber Amplifier Light Source for Multichannel WDM Applications" de J. S Lee et Y.C. Chung, publié dans IEEE Photonics Technology Letters, Vol. 5, n°12, Décembre 1993.

Cette solution emploie une source de lumière à large bande couplée à des moyens de séparation de longueurs d'onde discrètes. Après avoir mentionné des sources de lumière à diode photo-émissives et à diode superluminescente, l'article préconise l'emploi d'un amplificateur à émission spontanée constitué d'une fibre optique dopée à l'erbium, pompée à 1,48 µm, en série avec un isolateur visant à interdire tout effet laser.

Les moyens de séparation des longueurs d'onde ne sont pas décrits, mais simplement présentés comme un démultiplexeur de longueurs d'onde, c'est-à-dire, grosso modo, comme un ensemble de filtres attaqués en parallèle et fournissant des longueurs d'onde sélectionnées sur des sorties individuelles. Cela ne permet d'obtenir qu'une sélectivité et une pureté spectrale limitée, tout en introduisant des pertes élevées pour chacune des longueurs d'onde sélectionnées.

L'ensemble, non encore expérimenté, pourrait fournir une vingtaine de canaux séparés de 0,6 nm.

EP-A-0 524 558 décrit une source à longueur d'onde unique qui, pour supprimer le bruit résiduel large bande, compoerte un coupleur optique 2x2 et deux filtres de Bragg.

US-A5 283 686 préconise de supprimer le bruit résiduel large bande par l'intermédiaire d'un circulateur optique à 4 ports.

La présente invention vise à perfectionner les solutions de l'art antérieur, de manière à permettre un plus grand nombre de canaux et à réduire sensiblement les coûts, tout en fournissant des longueurs d'onde discrètes sélectionnées ayant un niveau de puissance nettement plus élevé.

Ce but est atteint par une source de longueur d'ondes multiples conforme à la revendication 1.

Les revendications dépendantes définissent des modes de réalisation particuliers de la source de longueurs d'ondes multiples objet de la revendication 1.

Les différents objets et caractéristiques de la présente invention apparaîtront plus clairement dans la description qui va suivre d'un mode de mise oeuvre de l'invention, donnée à titre d'exemple non limitatif, en se reportant aux figures annexées qui représentent :
- la figure 1, le schéma d'une source de longueurs d'onde multiple conforme à la présente invention,
- la figure 2, le schéma d'une source de longueurs d'onde multiples utile à la compréhension de l'invention.

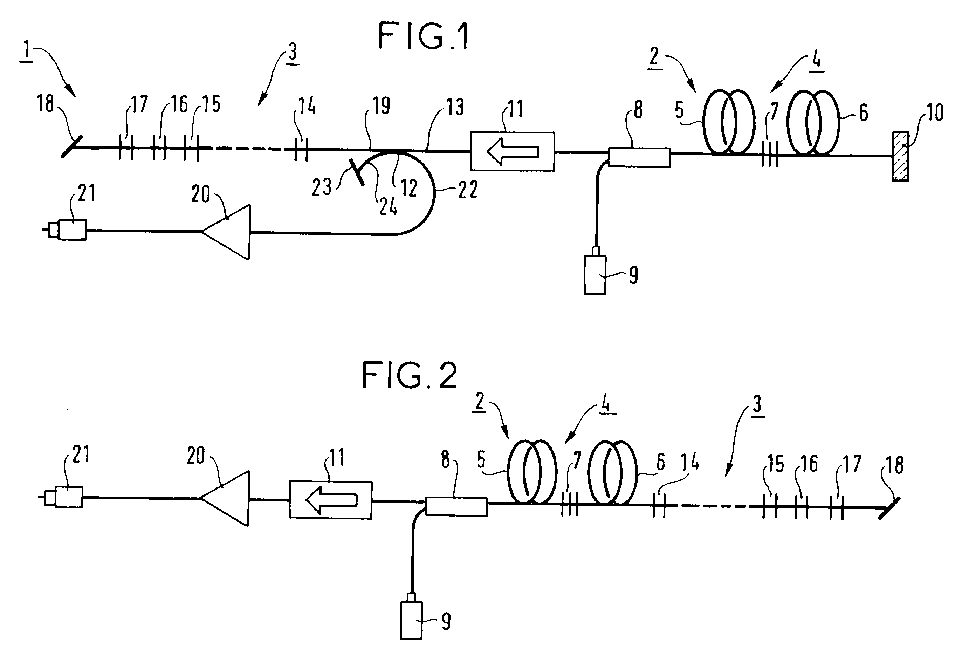

La source de longueurs d'onde multiples de la figure 1, indiquée par la référence générale 1, est utilisable, notamment, pour la communication optique à plusieurs canaux multiplexés en longueur d'onde. Elle comprend essentiellement :
- une source de lumière à large bande 2 et
- des moyens de séparation de longueurs d'onde discrètes 3.

La source de lumière 2 comprend quant à elle :
- une fibre optique amplificatrice à émission spontanée 4, en deux sections 5 et 6 entre lesquelles est inséré un filtre 7, égalisant le niveau de l'émission spontanée de la fibre 4 ; cette fibre est une fibre optique fluorée, dopée à l'erbium telle que celle qui est décrite dans "Experimental investigations of the gain flatness characteristics for 1.55 µm fluoride-based erbium-doped fibre amplifiers", de D. Bayard, B. Clesca, L. Hamon et J-L. Beylat, publié dans IEEE Photonic Technology Letters, Vol. 6, n°5, 613 (1994),
- un coupleur 8 pour le couplage du rayonnement de pompage à 1480 nm d'une diode laser 9, qui peut être une diode commercialisée par la société ALCATEL OPTRONICS, sous la référence A 1948 PLM 85-100 ou 140 mW,
- un miroir 10 réfléchissant la totalité des rayonnements produit par la source de lumière 2,
- un isolateur 11 empêchant que tout rayonnement réfléchi en aval ne puisse atteindre la fibre 4 et favoriser ainsi certaines longueurs d'onde seulement par effet laser.

Le rayonnement de pompage parcourt deux fois la fibre 4, du coupleur 8 au miroir 10 et retour et engendre, par émission spontanée amplifiée à double passage dans la fibre fluorée dopée à l'erbium, un rayonnement s'étendant entre 1530 et 1570 nm, avec une puissance globale de 40 mW, non optimisée, distribuée de façon relativement uniforme, grâce à l'effet additionnel du filtre 7. Ce rayonnement traverse le coupleur 8 et l'isolateur 11 pour atteindre les moyens de séparation de longueurs d'onde discrètes 3.

Ces moyens de séparation de longueurs d'onde discrètes 3 comprennent :
- un coupleur directionnel 3 dB 12, la sortie de l'isolateur 11 étant connecté à un accès amont 13 de celui-ci,
- des réseaux de Bragg réfractifs en cascade, 14, 15, 16, 17, chacun d'eux réfléchissant une longueurs d'onde discrète λn..., λ3, λ2, λ1, suivis par une terminaison absorbante 18, connectés à un accès aval 19 du coupleur 12 et réfléchissant vers ces accès l'énergie aux longueurs d'onde discrètes précitées, contenue dans le rayonnement de la source de lumière 2,
- une sortie de source 21, connectée à un autre accès amont du coupleur 12 ; cette sortie de source est précédée d'un amplificateur à fibre optique 20, employant lui aussi une fibre optique fluorée dopée à l'erbium, et donc compatible avec la source de lumière 2.
- une terminaison absorbante 23 connectée à un deuxième accès aval 24 du coupleur 12.

Le rayonnement issu de la source 2 est partagé également par le coupleur 12 entre ses deux accès aval 19 et 24. La terminaison 23 absorbe le rayonnement envoyé sur l'accès aval 24. Par contre, les réseaux réfractifs 14, 15, 16, 17 renvoient vers le coupleur chacun une longueur d'onde discrète λn..., λ3, λ2, λ1. Les longueurs d'onde ainsi sélectionnées sont partagées également par le coupleur 12 entre ses deux accès amont 13 et 22. L'énergie fournie sur l'accès 13 est absorbée par l'isolateur 11. Celle qui est fournie sur l'accès 22 est amplifiée par l'amplificateur 20 avant d'être fournie sur la sortie de source 21. Les moyens de séparation de l'invention sélectionnent ainsi, et séparent spectralement, avec une atténuation minimale, des longueurs d'onde discrètes qui peuvent être amplifiées en commun, avant d'être séparées spatialement.

Plus précisément, la cascade de filtres réfractifs de l'invention offre l'avantage de ne pas être limitée en nombre de voies, du fait que ces filtres sont quasi-transparents aux longueurs d'ondes autres que celle que chacun réfléchit, tandis que l'efficacité de la réflexion est très élevée (au plus 0, 2 dB de perte par réflexion). Par comparaison, les meilleurs composants optiques de multiplexage/démultiplexage en longueurs d'onde actuels, parmi lesquels on peut citer le multiplexeur 1 x 8 de la société JOBIN YVON, à réseau STIMAX, sont limités en nombre de voies (18 au plus dans la bande d'intérêt) et apportent une atténuation bien plus élevée (3 dB au moins de perte par voie). Ils sont par ailleurs relativement coûteux.

On se tournera maintenant vers la figure 2 qui illustre une source de longueurs d'onde multiples utile à la compréhension de l'invention. Dans cette figure 2, les mêmes éléments conservent les références qui leur ont été donnée à la figure 1.

On retrouve ainsi une source de lumière 2 et des moyens de séparation de longueurs d'onde 3, ces derniers comprenant une cascade de réseaux réfractifs 14, 15, 16, 17 suivie d'une terminaison absorbante 18, une fibre optique amplificatrice fluorée dopée à l'erbium 4, en deux sections 5 et 6, séparées l'une de l'autre par un filtre 7, le coupleur de pompe 8 et la diode de pompage 9, l'isolateur 11, l'amplificateur 20 et la sortie 21.

En quelque sorte, le miroir 10 de la figure 1 est remplacé par les réseaux réfractifs 14, 15, 16, 17, jouant le même rôle que celui-ci de renforcement de l'émission spontanée amplifiée de l'amplificateur 4, mais sélectivement, au profit de chacune des longueurs d'onde discrète λn..., λ 3, λ2, λ1. De la sorte, à la sortie de la source de lumière 2, c'est-à-dire de l'isolateur 11, on ne transmet à l'amplificateur 20 qu'essentiellement les longueurs d'onde ainsi engendrées.

Une telle solution économise un coupleur et les pertes qu'il introduit, mais fournit des canaux de pureté spectrale moindre.

## Revendications

1. Source de longueurs d'ondes multiples, notamment pour la communication optique à plusieurs canaux multiplexés en longueur d'onde, comprenant une source de lumière produisant un spectre à large bande (2), un isolateur optique (11) et des moyens de séparation de longueurs d'onde discrètes (3) comprenant des réseaux de Bragg réfractifs en cascade (14, 15, 16, 17), chacun d'eux réfléchissant une desdites longueurs d'onde discrètes (λn..., λ3, λ2, λ1) vers une sortie de source (21), caractérisée en ce que ladite source de lumière à large bande (2), ledit isolateur optique (11) et lesdits moyens de séparation (3) sont disposés en série dans cet ordre, et en ce qu'un coupleur optique directionnel (13) est disposé entre ledit isolateur optique (11) et lesdits moyens de séparation (3) pour prélever les longueurs d'ondes discrètes réfléchies par lesdits moyens de séparation.

2. Source de longueurs d'ondes multiples conforme à la revendication 1, caractérisée en ce que des moyens additionnels (18) sont prévus pour absorber le rayonnement non réfléchi par lesdits réseaux réfractifs (14, 15, 16, 17) en cascade.

3. Source de longueurs d'ondes multiples conforme à la revendication 2, caractérisée en ce que lesdits moyens additionnels (18) sont une terminaison absorbante (18) disposée après le dernier des réseaux de Bragg réfractifs (17).

4. Source de longueurs d'ondes multiples conforme à l'une quelconque des revendications qui précèdent, caractérisée en ce que ladite source de lumière (2) comprend une fibre optique fluorée dopée à l'erbium (4).

5. Source de longueurs d'ondes multiples conforme à la revendication 4, caractérisée en ce que ladite source de lumière (2) comprend deux sections de fibre entre lesquelles est inséré un filtre d'égalisation de niveau (7).

## Patentansprüche

1. Quelle für Mehrfachwellenlängen, insbesondere für die optische Kommunikation mit mehreren in der Wellenlänge gemultiplexten Kanälen, die eine ein Breitbandspektrum erzeugende Lichtquelle (2), einen optischen Isolator (11) und Mittel (3) zur Trennung von diskreten Wellenlängen umfasst, die kaskadenförmig angeordnete Bragg'sche Brechungsgitter (14, 15, 16, 17) umfassen, wobei jedes von ihnen eine der diskreten Wellenlängen (λn..., λ3, λ2, λ1) zu einem Quellenausgang (27) reflektiert, dadurch gekennzeichnet, dass die Breitbandlichtquelle (2), der optische Isolator (11) und die Trennungsmittel (3) in dieser Reihenfolge in Reihe angeordnet sind und dass ein optischer Richtungskoppler (13) zwischen dem optischen Isolator (11) und den Trennungsmitteln (3) angeordnet ist, um die von den Trennungsmitteln reflektierten diskreten Wellenlängen zu entnehmen.

2. Quelle für Mehrfachwellenlängen nach Anspruch 1, dadurch gekennzeichnet, dass zusätzliche Mittel (18) vorgesehen sind, um die von den kaskadenförmig angeordneten Brechungsgittern (14, 15, 16, 17) nicht reflektierte Strahlung zu absorbieren.

3. Quelle für Mehrfachwellenlängen nach Anspruch 2, dadurch gekennzeichnet, dass die zusätzlichen Mittel (18) ein absorbierender Abschluss (18) sind, der hinter dem letzten (17) der Bragg'schen Brechungsgitter angeordnet ist.

4. Quelle für Mehrfachwellenlängen nach einem der vorhergehenden Ansprüche, dadurch gekennzeichnet, dass die Lichtquelle (2) einen mit Erbium dotierten, fluorhaltigen Lichtwellenleiter (4) umfasst.

5. Quelle für Mehrfachwellenlängen nach Anspruch 4, dadurch gekennzeichnet, dass die Lichtquelle (2) zwei Faserabschnitte umfasst, zwischen welche ein Filter (7) zum Niveauausgleich eingefügt ist.

## Claims

1. Multiple wavelength source, in particular for optical communication employing a plurality of wavelength multiplexed channels, comprising a light source producing a broadband spectrum (2), an optical isolator (11) and discrete wavelength separator means (3) comprising cascaded refractive Bragg gratings (14, 15, 16, 17) each reflecting one of said discrete wavelengths (λn, λ3, λ2, λ1) to a source output (21), characterized in that said broadband light source (2), said optical isolator (11) and said separator means (3) are disposed in series in that order, and in that a directional optical coupler (13) is disposed between said optical isolator (11) and said separator means (3) to sample the discrete wavelengths reflected by said separator means.

2. Multiple wavelength source according to claim 1 characterized in that additional means (18) are provided to absorb the radiation not reflected by said cascaded refractive gratings (14, 15, 16, 17).

3. Multiple wavelength source according to claim 2 characterized in that said additional means (18) are in the form of an absorbent termination (18) disposed on the output side of the last of the refractive Bragg gratings (17).

4. Multiple wavelength source according to any one of the preceding claims characterized in that said light source (2) comprises an erbium-doped fluoride-based optical fiber (4).

5. Multiple wavelength source according to claim 4 characterized in that said light source (2) comprises two sections of fiber between which is inserted a level equalizing filter (7).
